# FASCICULE DE BREVET EUROPEEN

(11) **EP 4 765 765 B1**
(45) Date de publication et mention de la délivrance du brevet: **02.12.2026**
(21) Numéro de dépôt: 25209273.9
(22) Date de dépôt: 16.10.2025
(51) Int. Cl.: H04L 61/2514, H04L 61/5007, H04L 61/5014, H04L 9/40

(54) **PROCÉDÉ DE CONTROLE D'UNE SESSION COMMUNICATION ENTRE UN DISPOSITIF UTILISATEUR ET UN SYSTÈME DE SERVICE, SYSTÈME DE CONTROLE ET PROGRAMME D' ORDINATEUR CORRESPONDANT**
VERFAHREN ZUR STEUERUNG EINER KOMMUNIKATIONSSITZUNG ZWISCHEN EINER BENUTZERVORRICHTUNG UND EINEM DIENSTSYSTEM, ÜBERWACHUNGSSYSTEM UND COMPUTERPROGRAMM DAFÜR
METHOD FOR CONTROLLING A COMMUNICATION SESSION BETWEEN A USER DEVICE AND A SERVICE SYSTEM, CONTROL SYSTEM AND CORRESPONDING COMPUTER PROGRAM

(30) Priorité: 17.12.2024 FR 2414352
(43) Date de publication de la demande: 24.06.2026
(73) Titulaire: SAGEMCOM BROADBAND SAS, 92270 Bois-Colombes (FR)
(72) Inventeur: BELLANGER, Julien, 92270 BOIS-COLOMBES (FR)
(74) Mandataire: Cabinet Le Guen Maillet

(56) Documents cités:
- EP-A1- 2 922 252
- US-A1- 2023 379 304

## Description

### DOMAINE TECHNIQUE

Le domaine de l'invention est celui des réseaux de télécommunication locaux intégrant une pluralité de dispositifs utilisateurs, tels qu'un téléviseur (par exemple une télévision connectée de type « *Smart TV* »), un décodeur TV (« *Set Top Box* » en anglais), etc. En particulier, la présente divulgation concerne l'établissement d'une session de communication sécurisée entre un dispositif utilisateur et un système (e.g., serveur) hébergeant un service requis par le dispositif utilisateur.

### ETAT DE LA TECHNIQUE ANTERIEURE

En général, dans un réseau de communication local, ou LAN (« *Local Area Network* » en anglais), l'accès à des services accessibles *via* un réseau de communication étendu ou WAN (« *Wide Area Network* » en anglais), se fait depuis une adresse IP (pour « *Internet Protocol* » en anglais) publique fixe et en utilisant des identifiants utilisateurs uniques pour chaque service. Classiquement, l'adresse IP publique utilisée pour établir les sessions de communications est l'adresse IP publique de la passerelle de réseau de communication (« *gateway* » en anglais), qui fait office de routeur pour les dispositifs utilisateurs du réseau de communication local.

De ce fait, un fournisseur de service a accès à la totalité des informations émises par l'utilisateur au cours des différentes sessions de communication établies entre le dispositif utilisateur et le système hébergeant le service requis. En effet, puisque toutes les sessions de communication sont établies à partir de la même adresse IP publique, le fournisseur de services peut aisément accumuler ou agréger des informations liées à l'utilisateur. Ainsi, des informations qui, isolées, n'auraient aucun caractère personnel, peuvent, si elles sont concaténées avec d'autres informations liées au même utilisateur, devenir des informations pouvant avoir un caractère personnel. Ceci peut poser un problème de sécurité pour l'utilisateur notamment si un tiers malintentionné arrive à collecter/agréger les informations émises par l'utilisateur de cette manière.

Il est alors souhaitable de pallier cet inconvénient de l'état de la technique.

Il est notamment souhaitable de fournir une solution qui permet d'améliorer la sécurité des sessions de communication entre un dispositif utilisateur et un système hébergeant un service requis par ce dispositif utilisateur. En particulier, il est souhaitable de fournir une solution qui permette de limiter la possibilité pour les fournisseurs de services ou un tiers malintentionné de concaténer des informations concernant l'utilisateur et/ ou ses dispositifs utilisateurs à partir d'une adresse IP publique unique et d'un identifiant utilisateur unique.

Le document US 2023/379304, 23 novembre 2023 (2023-11-23), décrit un système pour sélection dynamique de profils VPN via DNS. Le document EP 2922252, 23 septembre 2015 (2015-09-23), décrit des techniques pour l'allocation dynamique de ressources de service dans un réseau MPLS.

### EXPOSE DE L'INVENTION

Il est proposé ici un procédé de contrôle d'une session de communication entre un dispositif utilisateur et un système de service hébergeant un service auprès duquel ledit dispositif utilisateur demande à accéder, ledit dispositif utilisateur étant connecté à un réseau de communication local comprenant une passerelle réseau d'accès à un réseau étendu. Le procédé est exécuté dans un système de contrôle. Le procédé comprend :
- exécuter une première phase de souscription comprenant :
   (i) allouer un ensemble d'adresses IP publiques pour établir ladite session de communication avec ledit système de service,
   (ii) recevoir, en provenance dudit système de service, un ensemble de jetons d'authentification pour autoriser un accès audit système de service,
- exécuter une deuxième phase, d'établissement de ladite session de communication comprenant :
   (a) recevoir une requête d'accès audit système de service, et sélectionner aléatoirement un couple associant une adresse IP publique et un jeton d'authentification parmi une liste de couples associant chacun une adresse IP publique choisie parmi l'ensemble d'adresses IP publiques obtenu et un jeton d'authentification choisi parmi l'ensemble de jetons d'authentification obtenu,
   (b) établir ladite session de communication avec ledit système de service en utilisant ledit couple sélectionné.

Ainsi, il est possible d'améliorer la sécurité des communications entre un dispositif utilisateur et un ou des systèmes de services hébergeant des services auxquels l'utilisateur a accès, en utilisant un système de contrôle comme intermédiaire. En particulier, l'utilisation de plusieurs adresse IP publiques associées à plusieurs jetons d'authentification permet au système de contrôle d'anonymiser les requêtes émises par le dispositif utilisateur à destination des systèmes de services. En effet, du point de vue des systèmes de services, ces requêtes semblent provenir de plusieurs utilisateurs ou dispositifs utilisateurs différents et ne peuvent donc pas être liées à un seul utilisateur. Cette anonymisation des informations transmises (i.e., des requêtes émises par l'utilisateur) par l'utilisateur permet de limiter et complexifier l'agrégation d'informations concernant l'utilisateur par un fournisseur de service ou un tiers malintentionné. En effet, en communiquant avec les systèmes de services *via* l'utilisation de plusieurs adresses IP publiques et d'identifiants utilisateurs (i.e., jeton d'authentification), le système de contrôle disperse les informations de l'utilisateur et obfusque ainsi des informations sensibles telles que les informations à caractère personnel transitant entre le dispositif utilisateur et les systèmes de services.

Selon un mode de réalisation particulier, créer ladite liste de couples avant que ladite requête d'accès audit système de service ne soit reçue, ladite liste de couples étant la même pour plusieurs sessions de communication distinctes. Avantageusement, il est possible d'utiliser une même liste de couples pour plusieurs sessions de communication.

Selon un mode de réalisation particulier, créer ladite liste de couples après avoir reçu ladite requête d'accès audit système de service, ladite liste de couples étant nouvelle à chaque session de communication. Avantageusement, à chaque session de communication une nouvelle liste de couples est créée, ce qui permet d'avoir de nouvelles combinaisons d'adresses IP publique et de jetons d'authentification pour chaque session de communication.

Selon un mode de réalisation particulier, allouer un ensemble d'adresses IP publiques pour établir ladite session de communication avec ledit système de service comprend : allouer un ensemble d'adresses IP publiques pour chaque service pour lequel ledit dispositif utilisateur est autorisé à accéder, ou allouer un ensemble d'adresses IP publiques pour plusieurs services pour lesquels ledit dispositif utilisateur est autorisé à accéder. Il est ainsi possible d'avoir des adresses IP publiques spécifiques pour des services particuliers ou de mutualiser les adresses IP publiques, notamment lorsque plusieurs systèmes de services collaborent ensemble pour fournir un service à l'utilisateur.

Selon un mode de réalisation particulier, recevoir, en provenance dudit système de service, ledit ensemble de jetons d'authentification pour autoriser un accès audit système de service comprend : obtenir un ensemble de jetons d'authentification pour chaque service pour lequel ledit dispositif utilisateur est autorisé à accéder, ou obtenir un ensemble de jetons d'authentification pour plusieurs services pour lesquels ledit dispositif utilisateur est autorisé à accéder. Il est ainsi possible d'avoir des jetons d'authentification spécifiques pour des services particuliers ou de mutualiser les jetons d'authentification, notamment lorsque plusieurs systèmes de services collaborent ensemble pour fournir un service à l'utilisateur.

Selon un mode de réalisation, chaque jeton d'authentification dudit ensemble de jetons d'authentification est valable pour plusieurs sessions de communication distinctes sur une période prédéterminée de validité. Il est ainsi possible de renouveler les jetons d'authentification pour limiter la redondance des couples adresse IP publique/jeton d'authentification.

Il est également proposé ici un procédé de maintenance d'un dispositif utilisateur connecté à un réseau de communication local comprenant une passerelle réseau d'accès à un réseau étendu. Le procédé de maintenance comprend :
- établir une session de communication entre ledit dispositif utilisateur et un système de service de maintenance hébergeant un service de maintenance auprès duquel ledit dispositif utilisateur demande à accéder, en exécutant ledit procédé de contrôle d'une session de communication tel que décrit ci-dessus,
- effectuer une opération de maintenance sur ledit dispositif utilisateur, lorsque ladite session de communication est établie avec ledit système de service de maintenance.

De manière générale, par « opération de maintenance », on comprend tout type d'action visant à assurer la maintenance du dispositif utilisateur, par exemple : un diagnostic d'un ou plusieurs dysfonctionnements du dispositif utilisateur, des opérations de réparation ou résolution des dysfonctionnements identifiés.

Il est aussi proposé ici un système de contrôle d'une session de communication entre un dispositif utilisateur et un système de service hébergeant un service auprès duquel ledit dispositif utilisateur demande à accéder, ledit dispositif utilisateur étant connecté à un réseau de communication local comprenant une passerelle réseau d'accès à un réseau étendu. Le système de contrôle comprend de la circuiterie électronique configurée pour :
- exécuter une première phase de souscription comprenant :
   (i) allouer un ensemble d'adresses IP publiques pour établir ladite session de communication avec ledit système de service,
   (ii) recevoir, en provenance dudit système de service, un ensemble de jetons d'authentification pour autoriser un accès audit système de service,
- exécuter une deuxième phase, d'établissement de ladite session de communication comprenant :
   (a) recevoir une requête d'accès audit système de service, et sélectionner aléatoirement un couple associant une adresse IP publique et un jeton d'authentification parmi une liste de couples associant chacun une adresse IP publique choisie parmi l'ensemble d'adresses IP publiques obtenu et un jeton d'authentification choisi parmi l'ensemble de jetons d'authentification obtenu,
   (b) établir ladite session de communication avec ledit système de service en utilisant ledit couple sélectionné.

Il est également proposé ici une passerelle réseau d'accès à un réseau de communication étendu connectée à un réseau de communication local. Cette passerelle réseau comprend un système de contrôle tel que décrit ci-dessus.

Il est aussi proposé ici un produit programme d'ordinateur, comportant des instructions entraînant l'exécution, par un processeur, du procédé tel que décrit ci-dessus, lorsque lesdites instructions sont exécutées par le processeur.

Il est aussi proposé ici un support de stockage, stockant un programme d'ordinateur comportant des instructions entraînant l'exécution, par un processeur, du procédé tel que décrit ci-dessus, lorsque lesdites instructions sont lues et exécutées par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'environnement d'implémentation d'un procédé de contrôle d'une session de communication entre un dispositif utilisateur et un système de service, selon un mode de réalisation ;
[Fig. 2] illustre sous forme de diagramme les étapes du procédé de contrôle d'une session de communication entre un dispositif utilisateur et un système de service, selon un mode de réalisation ;
[Fig. 3] illustre schématiquement un exemple de plateforme matérielle permettant d'implémenter, sous forme de circuiterie électronique, le système de contrôle pour exécuter tout ou partie des étapes du procédé de contrôle d'une session de communication illustré dans la Fig. 2.

### EXPOSE DETAILLE DE MODES DE REALISATION

Le principe général de la présente divulgation est d'utiliser un système de contrôle de sessions de communication qui va jouer le rôle d'intermédiaire entre le dispositif utilisateur et le système hébergeant un service requis par le dispositif utilisateur pour anonymiser et obfusquer les informations transmises par l'utilisateur au cours de diverses sessions de communication.

Pour cela, le système de contrôle est configuré pour allouer à un service un ensemble d'adresses IP publiques pour l'établissement de sessions de communication. Chaque adresse IP publique dudit ensemble est ensuite associée à un jeton d'authentification permettant l'accès du système de contrôle au service requis par le dispositif utilisateur. Afin d'établir une session de communication sécurisée avec un système (e.g., serveur) hébergeant le service requis, le système de contrôle sélectionne aléatoirement un couple adresse IP publique/jeton d'authentification parmi une liste de couples. Autrement dit, pour chaque session de communication avec un système hébergeant un service, un couple adresse IP publique/jeton d'authentification spécifique est utilisé pour établir la session de communication.

Le système de contrôle anonymise et obfusque ainsi les informations transmises par l'utilisateur au cours des différentes sessions de communication, puisque le dispositif utilisateur ne communique plus directement avec le système hébergeant le service en utilisant une adresse IP publique unique et un identifiant utilisateur unique. Plus particulièrement, d'un point de vue du système hébergeant le service, chaque session de communication est établie par un dispositif utilisateur différent. Il devient alors beaucoup plus difficile pour le fournisseur de service de concaténer les informations transmises par l'utilisateur, puisque les sessions de communication sont établies à partir de différentes adresses IP publiques et de différents identifiants utilisateurs (correspondant aux jetons d'authentification).

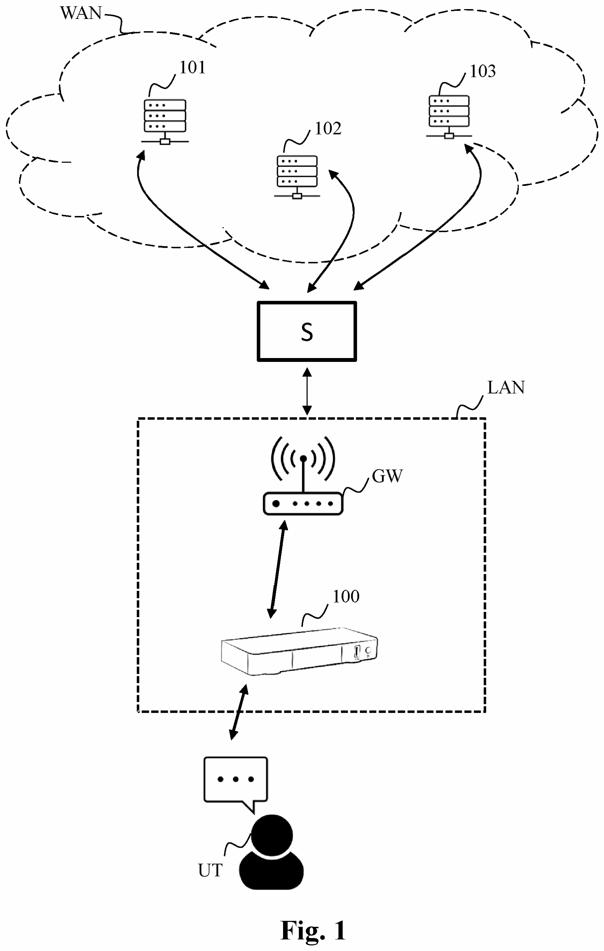

La **Fig. 1** illustre ainsi schématiquement un exemple d'environnement d'implémentation d'un procédé de contrôle d'une session de communication, selon un mode particulier de réalisation.

La Fig. 1 présente un premier réseau de communication de type local ou LAN (« *Local Area Network* » en anglais), noté LAN (appelé par la suite « réseau local LAN »). Ce réseau local LAN comprend une passerelle de communication réseau, notée GW, (aussi appelée par la suite « passerelle réseau GW »). La passerelle réseau GW est configurée pour opérer principalement, mais non exclusivement, des fonctions de lien et d'interface de communication entre le réseau local LAN et un deuxième réseau de communication de type étendu large bande ou WAN (« *Wide Area Network* » en anglais), noté WAN (appelé par la suite « réseau étendu WAN »). Un tel réseau étendu WAN est, par exemple, un réseau Internet. La passerelle réseau GW est configurée pour se connecter au réseau étendu WAN par exemple *via,* une liaison ADSL ou fibre, ou encore par liaison sans fil radio de type 2G à 5G.

Dans l'exemple de la Fig. 1, un dispositif utilisateur 100 est apte à se connecter au réseau local LAN, par exemple pour communiquer avec d'autres dispositifs utilisateurs (non représentés sur la Fig. 1), ou pour accéder au réseau étendu WAN *via* la passerelle réseau GW. La passerelle réseau GW est donc configurée pour jouer le rôle de routeur pour ce dispositif utilisateur 100. La connexion du dispositif utilisateur 100 avec la passerelle réseau GW peut se faire par liaison filaire (par exemple de type Ethernet), ou par d'autres types de connexion comme par exemple USB, liaison sans fil (par exemple de type : Wi-Fi, Bluetooth, Bluetooth Low Energy, Zwave, Zigbee, DECT-ULE... etc.). Toutefois, le dispositif utilisateur 100 n'est pas nécessairement configuré ou apte à se connecter à la passerelle réseau GW. Ainsi, le dispositif utilisateur 100 pourra être configuré pour accéder au réseau étendu WAN au moyen d'un réseau radio-mobile, par exemple de type 3G, 4G ou 5G ou tout autre infrastructure lui permettant d'accéder au réseau étendu WAN. Dans ce cas, le dispositif utilisateur 100 comprend une interface de communication sans fil de type 3G, 4G ou 5G.

Ainsi, il est entendu par la suite par « dispositif utilisateur » un dispositif électronique appartenant, ou destiné à appartenir (i.e., configuré pour appartenir), au réseau local LAN.

Par la suite, de manière illustrative, il est considéré que le dispositif utilisateur 100 est, par exemple, un dispositif audio/vidéo (A/V) destiné à diffuser des contenus audio et/ou vidéo sur le réseau local LAN. Dans l'exemple de la Fig. 1, le dispositif utilisateur 100 est un décodeur de flux audio-visuel, ou décodeur TV (« *Set-Top Box* » en anglais, aussi connu sous l'acronyme STB), de préférence un décodeur TV à commande vocale (ou « *Voice STB* »). Le dispositif utilisateur 100 (i.e., décodeur TV à commande vocale) est en outre configuré pour capter et générer un enregistrement audio correspondant à des requêtes et des réponses émises vocalement par l'utilisateur UT. Par exemple, dans le cadre d'un service de maintenance du dispositif utilisateur 100 (i.e., décodeur TV à commande vocale), l'utilisateur UT peut émettre vocalement des requêtes (e.g., pour demander l'accès au service de maintenance, etc.), ainsi que des réponses (e.g., réponses à des demandes émises par le système hébergeant le service de maintenance concernant des détails sur la configuration du dispositif utilisateur 100, etc.) pour le diagnostic et la résolution de dysfonctionnements du dispositif utilisateur 100. Ces requêtes et réponses vocales étant destinées à être transmises par le dispositif utilisateur 100 vers le système hébergeant le service de maintenance (ou système de maintenance) et, le cas échéant, vers tous autres systèmes de services collaborant avec le système de maintenance pour le diagnostic et la résolution de dysfonctionnements du dispositif utilisateur 100.

Il est à noter toutefois que le dispositif utilisateur 100 peut également être, par exemple, une télévision connectée (« *Smart TV* » en anglais), des enceintes connectées, etc. pouvant se connecter à la passerelle réseau GW, par exemple en Wi-Fi, pour l'accès au réseau étendu WAN.

Dans l'exemple de la Fig. 1, l'utilisateur UT a souscrit à divers services auprès de fournisseurs de services et accessibles sur le réseau étendu WAN depuis le réseau local LAN *via* la passerelle réseau GW. Dans l'exemple de la Fig. 1, de tels services sont :
- un service de maintenance du dispositif utilisateur 100, hébergé dans un système de maintenance 101. Le système de maintenance 101 permet de diagnostiquer des dysfonctionnements du dispositif utilisateur 100 et de les résoudre. Le système de maintenance 101 est, par exemple, un serveur de maintenance d'un fournisseur de services configuré pour assurer la maintenance de tout ou partie des dispositif utilisateurs 100. Le diagnostic des dysfonctionnements du dispositif utilisateur 100 et leur résolution peuvent être effectués par le système de maintenance 101 seul (i.e., toutes les étapes nécessaires au diagnostic et à la résolution des dysfonctionnements sont effectuées par le système de maintenance 101 uniquement) ou en collaboration avec d'autres systèmes de services (i.e., certaines étapes nécessaires au diagnostic et à la résolution des dysfonctionnements sont « sous-traitées » à d'autres systèmes de services qui effectuent alors ces étapes à la place du système de maintenance 101) ;
- un service de transcription vocale hébergé par un système de transcription 102. Le système de transcription 102 est, par exemple, un serveur de transcription d'un fournisseur de service configuré pour transcrire, ou convertir, des mots parlés ou du contenu audio, en texte écrit ou numérique. En particulier, le système de transcription 102 est configuré pour transcrire en texte un enregistrement audio, ou vocal (e.g., requêtes et réponses vocales de l'utilisateur UT), effectué par le dispositif utilisateur 100 ;
- un service d'intelligence artificielle hébergé par un système d'intelligence artificielle 103. Ce système d'intelligence artificielle 103 est, par exemple, un serveur d'intelligence artificielle d'un fournisseur de service configuré pour guider l'utilisateur UT dans la résolution des problèmes techniques liés à l'utilisation et/ou au fonctionnement du dispositif utilisateur 100.

Par la suite, il est entendu par « système de service » un système hébergeant un service. Ainsi, un tel système de service est par exemple un système de maintenance 101, un système de transcription vocale 102, ou un système d'intelligence artificielle 103.

Lorsque l'utilisateur UT souscrit à un service, par exemple un service de maintenance du dispositif utilisateur 100, d'autres services peuvent entrer en jeu pour le diagnostic et la résolution des dysfonctionnements du dispositif utilisateur 100. Par exemple, lorsque l'utilisateur UT souhaite diagnostiquer et résoudre des dysfonctionnements du dispositif utilisateur 100 *via* des requêtes et réponses vocales captées et enregistrées par le dispositif utilisateur 100, alors le système de maintenance 101 peut collaborer avec le système de transcription vocale 102 et le système d'intelligence artificielle 103 pour le diagnostic et la résolution de dysfonctionnements du dispositif utilisateur 100. Par exemple, le système de transcription 102 transcrit en texte les requêtes vocales et les réponses de l'utilisateur UT, et le système d'intelligence artificielle 103 guide l'utilisateur UT dans la résolution des problèmes techniques liés au fonctionnement du dispositif utilisateur 100.

Par la suite, afin d'illustrer la mise en œuvre du procédé de contrôle des sessions de communication décrit ci-après, il est considéré que le service souscrit par l'utilisateur UT est un service de maintenance du dispositif utilisateur 100 (e.g., décodeur TV à commande vocale). Ce service de maintenance fait appel à différents autres services : service de transcription hébergé sur le système de transcription 102 et service d'intelligence artificielle hébergé sur le système d'intelligence artificielle 103, pour le diagnostic et la résolution de dysfonctionnements du dispositif utilisateur 100.

Comme décrit précédemment, de manière classique, lorsque le dispositif utilisateur 100 souhaite accéder aux différents systèmes de services (e.g., système de maintenance 101, système de transcription 102 et/ou système d'intelligence artificielle 103), les sessions de communication entre le dispositif utilisateur 100 et les différents systèmes de services sont établies à partir d'une adresse IP publique unique (e.g., l'adresse IP publique de la passerelle réseau GW). Ainsi, les différents fournisseurs de services sont en mesure de regrouper, à partir de cette adresse IP publique unique, les informations transmises par l'utilisateur UT lors de l'utilisation de ces différents services.

Selon un mode de réalisation, afin de sécuriser les sessions de communication entre le dispositif utilisateur 100 et les différents systèmes de services (i.e., système de maintenance 101, système de transcription 102 et système d'intelligence artificielle 103), l'utilisateur UT souscrit à un service d'offuscations (« *obfuscation* » en anglais) et d'anonymisation hébergé dans un système de contrôle de sessions de communications, noté S (aussi appelé par la suite « système de contrôle S »). Ce service d'offuscations et d'anonymisation permet de rendre plus difficile pour les fournisseurs de services de concaténer les informations de l'utilisateur UT à partir d'une adresse IP publique unique et d'un identifiant utilisateur unique pour établir la session de communication. Ainsi, dans l'exemple de la Fig. 1, le système de contrôle S est configuré pour effectuer tout ou partie des étapes du procédé de contrôle de session de communication décrit ci-après.

La définition exacte d'une « session de communication » (ou « séquence d'utilisation ») dépend du ou des services requis. De manière générale, elle correspond à une série d'une ou plusieurs requêtes/réponses pour lesquelles le ou les services ont besoin d'un historique ou d'un contexte pour fournir à l'utilisateur UT une réponse pertinente. Par exemple, pour un assistant virtuel de maintenance d'un service de maintenance qui doit dialoguer avec l'utilisateur UT pour résoudre un problème (e.g. dans le cadre d'une opération de maintenance sur le décodeur TV à commande vocale), la séquence d'utilisation est la suite de requêtes de l'utilisateur UT et de réponses du service de maintenance associées au problème concerné.

Dans un mode de réalisation, le système de contrôle S est disponible sur le réseau local LAN, par exemple en étant intégré à la passerelle réseau GW.

Dans une variante, le système de contrôle S est accessible sur le réseau étendu WAN depuis le réseau local LAN *via* la passerelle réseau GW. Le système de contrôle S est alors hébergé sur un serveur dédié ou sur le « *cloud* » (ou « nuage »).

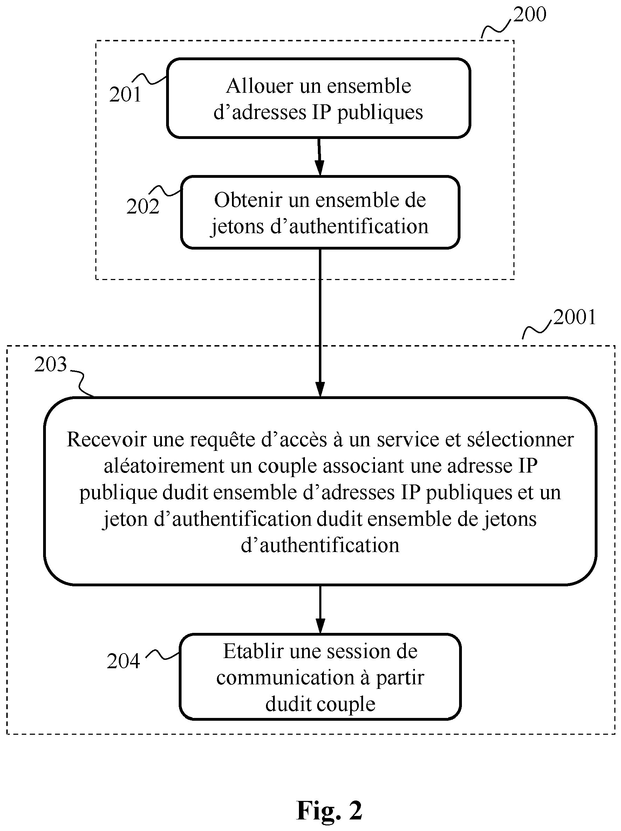

La **Fig. 2** illustre sous forme de diagramme les étapes du procédé de contrôle d'une session de communication selon un mode de réalisation. Le procédé de contrôle d'une session de communication est donc implémenté dans le système de contrôle S.

Au cours d'une première phase 200, dite « phase de souscription 200 », l'utilisateur UT souscrit au service d'offuscation et d'anonymisation hébergé sur le système de contrôle S. Un profil utilisateur de l'utilisateur UT est alors crée auprès de ce service d'offuscation et d'anonymisation. Le système de contrôle S a enregistré en mémoire ce profil utilisateur qui comprend, par exemple, une liste de services auxquels l'utilisateur UT a un droit d'accès (e.g., au service de maintenance, service de transcription, service d'intelligence artificielle).

Lors de cette phase de souscription 200, au cours d'une étape 201, le système de contrôle S fournit tout d'abord plusieurs adresses IP publiques (IP₁, IP₂...IPᵢ) pour pouvoir établir des sessions de communication avec les différents systèmes de services auxquels l'utilisateur UT a un droit d'accès (e.g., système de maintenance 101, système de transcription 102, système d'intelligence artificielle 103). Pour cela, selon un exemple, le système de contrôle S est un serveur physique doté de plusieurs interfaces réseau physiques et/ou virtuelles, chacune ayant sa propre adresse IP publique. Selon un autre exemple, le système de contrôle S est un ensemble de serveurs physiques ayant chacun une ou plusieurs interfaces réseau physiques et/ou virtuelles, chacune ayant sa propre adresse IP publique. Autrement dit, le système de contrôle S fournit plusieurs adresses IP publiques (IP₁, IP₂...IPᵢ) au moyen d'un ou plusieurs serveurs ayant chacun une ou plusieurs interfaces réseau physiques et/ou virtuelles.

Ensuite, le système de contrôle S alloue, à chaque système de service pour lequel l'utilisateur UT a un droit d'accès, un ensemble d'adresses IP publiques comprenant l'une ou l'autre ou une combinaison de ces adresses IP publiques pour pouvoir établir des sessions de communication avec le système de service concerné. Ainsi, à chaque service est alloué un ensemble d'adresses IP spécifiques. La liste de services enregistrée par le système de contrôle S lors de la souscription de l'utilisateur UT au service d'offuscation et d'anonymisation comprend donc en outre, pour chaque service auquel l'utilisateur UT à un droit d'accès, un ensemble d'adresses IP publiques alloué audit service.

Le système de contrôle S est donc configuré pour utiliser une ou plusieurs adresses IP publiques différentes en fonction du service qui est requis par l'utilisateur UT, de sorte que pour chaque service et chaque session de communication, une adresse IP publique différente d'un point de vue du système de service requis peut être utilisée.

Selon un mode de réalisation, un même ensemble d'adresses IP publiques est alloué à un service particulier ou à un ensemble de services distincts, dit « ensemble multi-services ». Ainsi, dans un premier exemple, le système de contrôle S alloue :
- un premier ensemble d'adresses IP publiques comprenant les adresses IP publiques : IP₁, IP₂ et IP₃ au système de maintenance 101,
- un deuxième ensemble d'adresses IP publiques comprenant les adresses IP publiques : IP₄, IP₅, IP₆ au système de transcription 102, et
- un troisième ensemble d'adresses IP publiques comprenant les adresses IP publiques : IP₇, IP₈ et IP₉ au système d'intelligence artificielle 103.

Dans un second exemple, le système de contrôle S alloue un ensemble d'adresses IP publiques unique à tous les systèmes de services, à savoir le système de maintenance 101, le système de transcription 102, le système d'intelligence artificielle 103. Par exemple, le système de contrôle S alloue l'ensemble d'adresses IP publiques comprenant les adresses IP publiques : IP₁, IP₂ et IP₃, à tous les systèmes de services.

Selon un autre mode de réalisation, lorsque le système de contrôle S alloue un ensemble d'adresses IP publiques différent d'un service à l'autre, ces ensembles d'adresses IP publiques distincts peuvent comprendre une ou plusieurs adresses IP publiques communes. Par exemple, le système de contrôle S alloue :
- au système de maintenance 101 un premier ensemble d'adresses IP publiques comprenant l'adresse IP publique IP₁,
- au système de transcription 102 un deuxième ensemble d'adresses IP publiques comprenant les adresses IP publiques IP₂ et IP₃,
- au système d'intelligence artificielle 103 un troisième ensemble d'adresses IP publiques comprenant l'adresse IP publique IP₂ qui est alors commune avec le système de transcription 102.

Les premier, deuxième et troisième ensembles sont différents d'un système de service à l'autre, mais les deuxième et troisième ensembles d'adresses IP publiques comprennent une adresse IP publique en commun.

A la suite de l'étape 201 ou parallèlement à celle-ci, au cours d'une étape 202, pour chaque service auquel l'utilisateur UT a accès, le système de contrôle S obtient un ensemble de jetons d'authentification (Tk₁, Tk₂...Tkⱼ) pour l'identification et l'authentification du système de contrôle S et l'autorisation d'accès au service en question. Dans un exemple, un jeton d'authentification est de type clé API (« *Application Programming Interface* » en anglais ou « Interface de Programmation d'Application »). Le jeton d'authentification correspond donc à un identifiant utilisateur permettant d'identifier et authentifier le système de contrôle S auprès de chaque système de service et, le cas échéant, lui autoriser l'accès au service requis par l'utilisateur UT.

En particulier, le système de contrôle S reçoit en provenance du ou des systèmes de services (e.g., système de maintenance 101, système de transcription 102, système d'intelligence artificielle 103), un ensemble de jetons d'authentification pour identifier et authentifier le système de contrôle S et autoriser l'accès au système de contrôle S. La liste de services enregistrée par le système de contrôle S comprend donc en outre pour chaque service, un ensemble de jetons d'authentification permettant au système de contrôle S de s'identifier et s'authentifier auprès des services requis par l'utilisateur UT et, ensuite accédé à ces services requis lorsqu'il y est autorisé.

Selon un mode de réalisation, un même ensemble de jetons d'authentification (Tk₁, Tk₂... Tkj) est attribué à un service particulier ou à un ensemble multi-services.

Ainsi, dans un premier exemple, le système de maintenance 101 transmet un premier ensemble de jetons d'authentification comprenant les jetons d'authentification Tk₁, Tk₂, Tk₃, le système de transcription 102 transmet un deuxième ensemble de jetons d'authentification comprenant les jetons d'authentification Tk₄, Tk₅, Tk₆, et le système d'intelligence artificielle 103 transmet un troisième ensemble de jetons d'authentification comprenant les jetons d'authentification Tk₇, Tk₈, Tk₉.

Selon un deuxième exemple, le système de maintenance 101, le système de transcription 102 et le système d'intelligence artificielle 103 transmettent au système de contrôle S le même ensemble de jetons d'authentification comprenant les jetons d'authentification Tk₁, Tk₂, Tk₃. Dans ce cas, les jetons d'authentification dudit ensemble permettent d'identifier et authentifier le système de contrôle S sur ces trois systèmes de services. Cela peut être le cas, par exemple, lorsque que ces trois services vont intervenir en collaboration pour effectuer, par exemple, une opération de maintenance du dispositif utilisateur 100 (i.e., diagnostic et résolution de dysfonctionnements du dispositif utilisateur 100).

Selon un autre mode de réalisation, lorsque l'ensemble de jetons d'authentification est différent d'un service à l'autre, ces ensembles de jetons d'authentification distincts peuvent comprendre un ou plusieurs jetons d'authentification communs. Par exemple :
- le système de maintenance 101 transmet un premier ensemble de jetons d'authentification comprenant les jetons d'authentification Tk₁ et Tk₂,
- le système de transcription 102 transmet un deuxième ensemble de jetons d'authentification comprenant les jetons d'authentification Tk₂ et Tk₃,
- le système d'intelligence artificielle 103 transmet un troisième ensemble de jetons d'authentification comprenant les jetons d'authentification Tk₁ et Tk₃.

Les premier, deuxième et troisième ensembles sont différents d'un service à l'autre, mais comprennent des jetons d'authentification en commun : le jeton d'authentification Tk₁ est commun pour le système de maintenance 101 et le système d'intelligence artificielle 103, le jeton d'authentification Tk₂ est commun pour le système de maintenance 101 et le système de transcription 102, et le jeton d'authentification Tk₃ est commun au système de transcription 102 et au système d'intelligence artificielle 103.

Selon un mode de réalisation, un jeton d'authentification est valable pour plusieurs sessions de communication distinctes sur une période de validité prédéterminée (e.g., 6 mois, 1 an...). Au-delà de la période prédéterminée de validité, un renouvellement des jetons d'authentification est effectué. Ainsi, de nouveaux jetons d'authentification sont obtenus par le système de contrôle S pour chaque service auquel l'utilisateur UT a accès. Il est ainsi possible, par exemple, de limiter la redondance des couples adresse IP publique/jeton d'authentification en renouvelant régulièrement l'ensemble de jetons d'authentification pour un service.

Au cours d'une deuxième phase 2001 dite « d'établissement d'une session de communication 2001 », l'utilisateur UT requiert l'accès à un service *via,* par exemple, son dispositif utilisateur 100. Afin de sécuriser les échanges entre le dispositif utilisateur 100 et les différents systèmes de services, le système de contrôle S va jouer le rôle d'intermédiaire afin d'offusquer et d'anonymiser les informations transmises par le dispositif utilisateur 100.

Par exemple, le dispositif utilisateur 100 rencontre un dysfonctionnement au niveau d'une de ses interfaces entrée/sortie telle que par exemple une sortie vidéo (connexion HDMI (*« High-Definition Multimedia Interface »* en anglais), connexion vidéo analogique, ou autre) rendant l'affichage inopérant ou de qualité réduite (ceci peut par exemple arriver en cas d'échec de négociation HDCP (« *High-Bandwidth Digital Content Protection* » en anglais), de dysfonctionnement matériel de la sortie vidéo du dispositif, ou encore en cas de problème au niveau du câble de liaison vidéo), ou encore un dysfonctionnement au niveau de boutons présents sur le dispositif, ou encore un dysfonctionnement sur des interfaces de saisie telles qu'une télécommande ou un clavier, ou encore d'autres types de dysfonctionnement.

L'utilisateur UT va donc faire appel au service de maintenance auquel il a souscrit et activer l'assistance de maintenance de son dispositif utilisateur 100, par exemple *via* une touche dédiée d'une télécommande configurée pour contrôler le dispositif utilisateur 100, ou un mot de réveil (« *Wake Word* » en anglais) permettant le démarrage de l'assistance de maintenance et l'enregistrement des requêtes et réponses vocales de l'utilisateur UT.

Ainsi, au cours d'une étape 203, le système de contrôle S reçoit, en provenance du dispositif utilisateur 100, une requête vocale pour l'accès à un ou de services auxquels l'utilisateur UT a souscrit. Une session de communication entre le dispositif utilisateur 100 et les différents systèmes de services requis par ce dernier est donc établie *via* le système de contrôle S.

En particulier, sur réception de la requête d'accès au ou aux systèmes de services, le système de contrôle S sélectionne alors aléatoirement, pour chaque service nécessaire, un couple associant une adresse IP publique et un jeton d'authentification parmi une liste de couples chacun associant une adresse IP publique choisie parmi l'ensemble d'adresses IP publiques alloué au service et un jeton d'authentification choisi parmi l'ensemble de jetons d'authentification obtenu pour ce service. Ce couple adresse IP/jeton d'authentification sélectionné est ensuite utilisé pour établir la session de communication entre le système de contrôle S et le système de service requis et ceci pendant l'intégralité de la session de communication (i.e., tous les échanges ou succession de requêtes/réponses pendant la session de communication sont effectués avec ce couple).

Cette liste de couples est créée par le système de contrôle S qui alloue une adresse IP publique choisie parmi l'ensemble d'adresses IP publiques alloué au service à un jeton d'authentification choisi parmi l'ensemble de jetons d'authentification obtenu pour ce service. Autrement dit, pour chaque service, une liste de couples adresse IP publiques/jeton d'authentification est créée.

Selon un mode de réalisation, cette liste de couples est créée pendant la phase de souscription 200, après l'étape 202. Cette liste de couples est donc commune ou valable pour plusieurs sessions de communication distinctes. C'est le cas par exemple lorsque la liste de couples comprend toutes les possibilités de couples adresse IP publique/jeton.

Dans une variante, cette liste de couples est créée pendant la phase d'établissement de la session de communication 2001, à réception de la requête d'accès au ou aux services. Cette liste de couples est donc spécifique à chaque session de communication et valable uniquement pour une session de communication particulière. Autrement dit, une liste de couples est créée à chaque session de communication avec le service requis. C'est le cas, par exemple, lorsque la liste de couples comprend un nombre prédéterminé de couple adresse IP publique/jeton, et non toutes les possibilités de couples adresse IP publique/jeton.

Selon un mode de réalisation, dans le cas où un nombre de couples est inférieur à un seuil prédéterminé, il est possible d'imposer de ne pas réutiliser (e.g., pour un même utilisateur UT, ou un même service) un couple déjà utilisé lors des N dernières sessions de communication.

Au cours d'une étape 204, le système de contrôle S établit une session de communication sécurisée avec les différents systèmes de services à partir du couple adresse IP publique/jeton d'authentification sélectionné pour chaque système de service.

L'ensemble des échanges effectué au cours de la session de communication entre le ou les systèmes de services et le dispositif utilisateur 100 se font *via* le système de contrôle S qui joue le rôle d'intermédiaire pour anonymiser et obfusquer les informations transmises par le dispositif utilisateur 100. En particulier, l'identification, l'authentification et l'autorisation d'accès au service porte sur le système de contrôle S et non sur le dispositif utilisateur 100 en tant que tel. Il est ainsi possible d'obfusquer et d'anonymiser les informations transmises par l'utilisateur UT aux systèmes de services en dispersant les informations fournies par l'utilisateur UT et ainsi anonymiser les informations pouvant avoir caractère personnel. Par exemple, l'utilisateur UT peut ainsi bénéficier d'un service de maintenance sur son dispositif utilisateur 100 (e.g., décodeur TV à commande vocale) sans exposer ses informations personnelles à des services (e.g. agent conversationnel mis en œuvre par un système d'intelligence artificielle 103 pour assister l'utilisateur UT dans la résolution d'un dysfonctionnement observé sur son dispositif utilisateur 100).

Selon un mode de réalisation, le procédé de contrôle des sessions de communication peut également permettre d'anonymiser les informations provenant d'un ensemble de dispositif utilisateur quelconques présents sur le réseau local LAN. Le service d'offuscation et d'anonymisation peut être implémenté soit sur la passerelle réseau GW, qui joue alors le rôle de proxy, soit sur un proxy situé sur le réseau étend WAN.

Selon ce mode de réalisation, le proxy détecte que le service ciblé par le dispositif utilisateur fait partie des services auxquels l'utilisateur UT a accès et qui sont enregistrés par le système de contrôle S intégré au proxy. Le proxy va alors utiliser le système de contrôle S pour propager la requête vers le service, en modifiant éventuellement le jeton d'authentification (e.g., s'il est présent dans la requête initiale provenant du dispositif utilisateur), dans la requête qui sera envoyée depuis le système de contrôle S du proxy vers le système hébergeant le service requis.

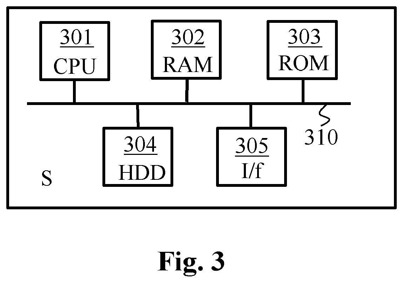

La **Fig. 3** illustre schématiquement un exemple de plateforme matérielle permettant d'implémenter, sous forme de circuiterie électronique, le système de contrôle S pour exécuter tout ou partie des étapes du procédé de contrôle des sessions de communication illustré dans la Fig. 2.

La plateforme matérielle comporte, reliés par un bus de communication 310 : un processeur ou CPU (« *Central Processing Unit* » en anglais) 301 ; une mémoire vive RAM (« *Random-Access Memory* » en anglais) 302 ; une mémoire morte 303, par exemple de type ROM (« *Read Only Memory* » en anglais) ou EEPROM (« *Electrically-Erasable Programmable ROM* » en anglais), telle qu'une mémoire Flash ; une unité de stockage, telle qu'un disque dur HDD (« *Hard Disk Drive* » en anglais) 304, ou un lecteur de support de stockage, tel qu'un lecteur de cartes SD (« *Secure Digital* » en anglais) ; et un gestionnaire d'interfaces I/f 305.

Le gestionnaire d'interfaces I/f 305 permet au système de contrôle S d'interagir avec des dispositifs utilisateurs tel que le dispositif utilisateur 100 et des systèmes de services tels que le système de maintenance 101, le système de transcription 102 et le système d'intelligence artificielle 103.

Le processeur 301 est capable d'exécuter des instructions chargées dans la mémoire vive 302 à partir de la mémoire morte 303, d'une mémoire externe, d'un support de stockage (tel qu'une carte SD), ou d'un réseau de communication. Lorsque la plateforme matérielle est mise sous tension, le processeur 301 est capable de lire de la mémoire vive 302 des instructions et de les exécuter. Ces instructions forment un programme d'ordinateur causant l'implémentation, par le processeur 301, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP (« *Digital Signal Processor* » en anglais) ou un microcontrôleur, ou être implémenté sous forme matérielle par une machine ou un composant électronique (« *chip* » en anglais) dédié ou un ensemble de composants électroniques (« *chipset* » en anglais) dédié, par exemple un composant FPGA (« *Field Programmable Gate Array* » en anglais) ou ASIC (« *Application Specific Integrated Circuit* » en anglais). D'une manière générale, le système de contrôle S comporte de la circuiterie électronique adaptée et configurée pour implémenter les fonctionnements, procédés et étapes décrits ici.

Des exemples de procédé de maintenance d'un dispositif utilisateur 100 de type décodeur TV à commande vocale connecté au réseau local LAN *via* la passerelle réseau GW vont à présent être décrits en détails.

On suppose qu'une session de communication est établie entre le décodeur TV 100 et le système de service 101 hébergeant un service de maintenance auprès duquel le décodeur TV 100 demande à accéder, en ayant préalablement exécuté le procédé de contrôle d'une session de communication tel que décrit ci-avant.

De manière classique, des équipements périphériques peuvent être associés au décodeur TV 100. Ces équipements périphériques sont, par exemple, connectés au décodeur TV 100 *via* une interface entrée/sortie dédiée. Cette connexion peut être établie par Wi-Fi, liaison HDMI, Bluetooth, etc. De tels équipements périphériques permettent notamment à l'utilisateur UT d'interagir avec le décodeur TV 100. Par exemple, un téléviseur est connecté au décodeur TV 100 et adapté pour afficher les flux A/V décodés. Une télécommande permet à l'utilisateur UT de piloter à distance le décodeur TV 100.

En temps normal, le décodeur TV 100 est configuré pour interagir avec ses équipements périphériques associés (e.g., télécommande, clavier, écran de télévision, etc.). L'utilisateur UT peut, par exemple, utiliser une télécommande pour interagir avec son écran de télévision connecté au décodeur TV 100.

Cependant, lorsque ces équipements périphériques sont inopérants ou présentent des dysfonctionnements, l'utilisateur UT requiert l'assistance du service de maintenance, par exemple en émettant une requête vocale qui est captée, enregistrée et envoyée par le décodeur TV 100.

On suppose que le décodeur TV 100 rencontre un dysfonctionnement au niveau de ses interfaces de communication avec des équipements périphériques (e.g., interfaces entrée/sortie du décodeur TV), tels que le téléviseur et la télécommande. Un ou plusieurs de ces équipements périphériques peuvent être inopérants.

De préférence, le service de maintenance permet de diagnostiquer des dysfonctionnements du décodeur TV et/ou de ses équipements périphériques et d'appliquer les actions nécessaires pour résoudre les dysfonctionnements.

En particulier, le système de maintenance 101 est un serveur de maintenance d'un fournisseur de services configuré pour assurer la maintenance de tout ou partie des dispositifs utilisateur du réseau local LAN, en particulier le décodeur TV 100 et ses périphériques.

Selon un exemple, la télécommande précédemment associée ou appariée au décodeur TV (par exemple par association (ou «*pairing*» en anglais) selon le protocole de communication ZigBee dans le cas d'une télécommande implémentant le profil RF4CE, ou par association selon le protocole de communication Bluetooth, ou encore selon un autre protocole de communication sans fil, est considérée comme inopérante.

La télécommande est considérée comme inopérante lorsque, par exemple : la télécommande n'est pas appariée (ou associée) au décodeur TV 100, la télécommande est appariée, mais son signal a un niveau trop faible (i.e., inférieure à un seuil prédéterminé de puissance du signal) pour pouvoir être correctement détectée par le décodeur TV 100, la télécommande est bien détectée par le décodeur TV 100 mais l'appariement n'est pas effectif en raison d'un problème de reconnaissance de clés de chiffrement, etc.

Ainsi, au cours de l'opération de maintenance, le décodeur TV 100 transmet, dans la session de communication en cours, au système de maintenance 101 une information d'association représentative d'une association (ou appariement) avec une ou des télécommandes au moment de l'opération de maintenance.

Cette information comprend, par exemple :
- une indication que le décodeur TV 100 n'est appairé à aucune télécommande, ou bien une liste des télécommandes auxquelles le décodeur TV 100 est appairé (ou associé) au moment de l'opération de maintenance, cette liste étant potentiellement vide dans le cas où aucune télécommande n'est appairée au décodeur TV 100, et/ou
- une indication qu'une ou plusieurs télécommandes appairées sont détectées à proximité du décodeur TV 100, associée à une mesure de la puissance du signal pour chaque télécommande détectée, et/ou,
- une indication qu'une télécommande reconnue par le décodeur TV 100 est détectée, mais qu'il n'arrive pas à communiquer avec celle-ci, parce que la clé de chiffrement est refusée par la télécommande.

En réponse à la réception de cette information d'association, lorsqu'aucune télécommande n'est appairée ou si la télécommande que l'utilisateur UT essaye de faire fonctionner n'appartient pas à la liste (ou table) des télécommandes associées (cas d'une nouvelle télécommande), alors le système de maintenance envoie, dans la session de communication en cours, au décodeur TV 100 une commande de mise en mode d'appairage ou commande d'association, par exemple.

Cette commande d'association permet alors de procéder à l'association d'une nouvelle télécommande ou à une nouvelle association avec une télécommande déjà connue (i.e., déjà enregistrée dans la liste des télécommande associées) du décodeur TV. Dans ce dernier cas, dès lors que le décodeur TV exécute cette commande d'association, le contenu de la liste (ou table) d'association (e.g. liste dans laquelle sont référencés des équipements périphériques sans fils avec lesquels le décodeur TV 100 s'est préalablement associé) est supprimé au moins en partie, de sorte que le décodeur TV 100 lance une procédure d'association adaptée à détecter la télécommande et à l'enregistrer dans la liste (ou table).

Dans un autre exemple, lorsqu'une ou plusieurs télécommandes appairées sont détectées à proximité du décodeur TV 100, mais que le niveau du signal est faible (i.e., inférieure à un seuil prédéterminé de puissance du signal), le système de maintenance 101 transmet alors à l'utilisateur UT une suggestion de changer les piles de la télécommande, par exemple *via* l'affichage d'un message sur un dispositif de communication (e.g., smartphone).

De même, si la télécommande est détectée mais que le décodeur TV 100 n'arrive pas à communiquer avec celle-ci, le système de maintenance 101 peut envoyer, dans la session de communication en cours, une commande d'oublier la télécommande puis de passer en mode appairage afin de forcer une renégociation des clés de chiffrement.

Selon un autre exemple, afin que le système de maintenance 101 détecte que la télécommande est inopérante, le décodeur TV 100 envoie, dans la session de communication en cours, au système de maintenance 101 des informations liées aux précédents démarrages du décodeur TV 100 (par exemple un nombre de redémarrages pendant une période de temps donnée, comme les dix dernières minutes ou la dernière heure), ainsi que des informations liées aux derniers appuis de touches de télécommande reçus par le décodeur TV 100 (par exemple s'il n'y a pas eu d'appui de touche détecté entre les deux ou cinq derniers démarrages).

Selon un autre exemple, dans lequel le rendu sur l'écran du téléviseur est considéré comme inopérant (e.g., car les paramètres de configuration HDMI employés par le décodeur TV 100 sont incorrects ou non supportés par l'écran), le décodeur TV 100 est configuré pour envoyer au système de maintenance 101, dans la session de communication en cours, des informations de configuration vidéo (e.g. résolution) et le modèle du téléviseur associé au décodeur TV. En fonction de ces informations, le système de maintenance 101 détermine éventuellement une résolution adaptée à l'écran et envoie, dans la session de communication en cours, une commande de changement de résolution au décodeur TV 100. Sur réception de cette commande, le décodeur TV 100 l'exécute, ce qui a pour effet de modifier la résolution de l'écran, si bien que l'affichage à l'écran soit visible pour l'utilisateur UT. Le système de maintenance 101 peut également transmettre directement au décodeur TV 100, dans la session de communication en cours, une configuration par défaut supposée être supportée par tous les modèles d'écrans de téléviseur, sans nécessiter d'avoir reçu de la part du décodeur TV 100 les informations relatives au modèle du téléviseur.

Selon un autre exemple, sur réception d'informations de configuration du décodeur TV 100 (e.g. adresse d'un serveur courant), le système de maintenance 101 transmet, dans la session de communication en cours, au décodeur TV 100 une nouvelle adresse d'un nouveau serveur nécessaire au bon démarrage ou au bon fonctionnement du décodeur TV 100.

Selon un autre exemple, on considère le diagnostic et la réparation d'une connexion HDMI non fonctionnelle entre le décodeur TV 100 et le téléviseur. Si la télécommande est fonctionnelle, l'utilisateur UT pourra initier le service de maintenance en appuyant sur une touche de télécommande ou sinon par voie vocale en prononçant un « *Wake Word* ». Dès lors que la session de communication a été établie comme décrit ci-avant, l'utilisateur UT pourra échanger librement avec un assistant vocal distant au sein de cette même session, sans risquer de dévoiler des informations sensibles propres à son environnement et/ou à caractère personnel auprès des différents serveurs de services qui pourraient être impliqués dans l'identification et la résolution du dysfonctionnement identifié.

Comme illustré dans les exemples ci-dessus, toutes les données échangées entre le service de maintenance 101 et l'utilisateur dans le cadre du procédé de maintenance selon l'invention, en particulier les informations émises par le décodeur TV 100 (plus généralement le dispositif utilisateur 100) sont offusquées de manière à assurer l'anonymat de l'utilisateur UT, ce qui contribue à améliorer la sécurité des communications entre le décodeur TV 100 et les systèmes de services et la protection des informations concernant l'utilisateur UT.

## Revendications

1. Procédé de contrôle d'une session de communication entre un dispositif utilisateur (100) et un système de service hébergeant un service auprès duquel ledit dispositif utilisateur (100) demande à accéder, ledit dispositif utilisateur (100) étant connecté à un réseau de communication local (LAN) comprenant une passerelle réseau (GW) d'accès à un réseau étendu (WAN), ledit procédé étant exécuté dans un système de contrôle (S), et ledit procédé étant **caractérisé en ce qu'**il comprend :
- exécuter une première phase de souscription comprenant :
(i) allouer (201) un ensemble d'adresses IP publiques pour établir ladite session de communication avec ledit système de service,
(ii) recevoir (202), en provenance dudit système de service, un ensemble de jetons d'authentification pour autoriser un accès audit système de service,
- exécuter une deuxième phase, d'établissement de ladite session de communication comprenant :
(a) recevoir (203) une requête d'accès audit système de service, et sélectionner aléatoirement un couple associant une adresse IP publique et un jeton d'authentification parmi une liste de couples associant chacun une adresse IP publique choisie parmi l'ensemble d'adresses IP publiques obtenu et un jeton d'authentification choisi parmi l'ensemble de jetons d'authentification obtenu,
(b) établir (204) ladite session de communication avec ledit système de service en utilisant ledit couple sélectionné.

2. Procédé selon la revendication 1, ledit procédé comprenant en outre : créer ladite liste de couples avant que ladite requête d'accès audit système de service ne soit reçue, ladite liste de couples étant la même pour plusieurs sessions de communication distinctes.

3. Procédé selon la revendication 1, ledit procédé comprenant en outre : créer ladite liste de couples après avoir reçu ladite requête d'accès audit système de service, ladite liste de couples étant nouvelle à chaque session de communication.

4. Procédé selon l'une quelconque des revendications 1 à 3, dans lequel, allouer un ensemble d'adresses IP publiques pour établir ladite session de communication avec ledit système de service comprend :
- allouer un ensemble d'adresses IP publiques pour chaque service pour lequel ledit dispositif utilisateur (100) est autorisé à accéder, ou
- allouer un ensemble d'adresses IP publiques pour plusieurs services pour lesquels ledit dispositif utilisateur (100) est autorisé à accéder.

5. Procédé selon l'une quelconque des revendications 1 à 4, dans lequel recevoir, en provenance dudit système de service, ledit ensemble de jetons d'authentification pour autoriser un accès audit système de service comprend :
- obtenir un ensemble de jetons d'authentification pour chaque service pour lequel ledit dispositif utilisateur (100) est autorisé à accéder, ou
- obtenir un ensemble de jetons d'authentification pour plusieurs services pour lesquels ledit dispositif utilisateur (100) est autorisé à accéder.

6. Procédé selon l'une quelconques des revendications 1 à 5, dans lequel chaque jeton d'authentification dudit ensemble de jetons d'authentification est valable pour plusieurs sessions de communication distinctes sur une période prédéterminée de validité.

7. Procédé de maintenance d'un dispositif utilisateur (100) connecté à un réseau de communication local (LAN) comprenant une passerelle réseau (GW) d'accès à un réseau étendu (WAN), ledit procédé de maintenance étant **caractérisé en ce qu'**il comprend :
- établir une session de communication entre ledit dispositif utilisateur (100) et un système de service de maintenance hébergeant un service de maintenance auprès duquel ledit dispositif utilisateur (100) demande à accéder, en exécutant ledit procédé de contrôle d'une session de communication selon l'une quelconque des revendications 1 à 6,
- effectuer une opération de maintenance sur ledit dispositif utilisateur (100), lorsque ladite session de communication est établie avec ledit système de service de maintenance.

8. Système de contrôle d'une session de communication entre un dispositif utilisateur (100) et un système de service hébergeant un service auprès duquel ledit dispositif utilisateur (100) demande à accéder, ledit dispositif utilisateur (100) étant connecté à un réseau de communication local (LAN) comprenant une passerelle réseau (GW) d'accès à un réseau étendu (WAN), ledit système de contrôle (S) étant **caractérisé en ce qu'**il comprend de la circuiterie électronique configurée pour :
- exécuter une première phase de souscription comprenant :
(i) allouer (201) un ensemble d'adresses IP publiques pour établir ladite session de communication avec ledit système de service,
(ii) recevoir (202), en provenance dudit système de service, un ensemble de jetons d'authentification pour autoriser un accès audit système de service,
- exécuter une deuxième phase, d'établissement de ladite session de communication comprenant :
(a) recevoir (203) une requête d'accès audit système de service, et sélectionner aléatoirement un couple associant une adresse IP publique et un jeton d'authentification parmi une liste de couples associant chacun une adresse IP publique choisie parmi l'ensemble d'adresses IP publiques obtenu et un jeton d'authentification choisi parmi l'ensemble de jetons d'authentification obtenu,
(b) établir (204) ladite session de communication avec ledit système de service en utilisant ledit couple sélectionné.

9. Passerelle réseau (GW) d'accès à un réseau de communication étendu (WAN) connectée à un réseau de communication local (LAN), ladite passerelle réseau (GW) étant **caractérisée en ce qu'**elle comprend un système de contrôle (S) selon la revendication 8.

10. Produit programme d'ordinateur, comportant des instructions entraînant l'exécution, par un processeur, du procédé selon l'une quelconque des revendications 1 à 6, lorsque lesdites instructions sont exécutées par le processeur.

11. Support de stockage, stockant un programme d'ordinateur comportant des instructions entraînant l'exécution, par un processeur, du procédé selon l'une quelconque des revendications 1 à 6, lorsque lesdites instructions sont lues et exécutées par le processeur.

## Patentansprüche

1. Verfahren zum Steuern einer Kommunikationssitzung zwischen einer Benutzervorrichtung (100) und einem Dienstsystem, das einen Dienst hostet, auf den die Benutzervorrichtung (100) den Zugang anfordert, wobei die Benutzervorrichtung (100) mit einem lokalen Kommunikationsnetz (LAN) verbunden ist, das ein Netzwerk-Gateway (GW) für den Zugang zu einem Weitverkehrsnetz (WAN) umfasst, wobei das Verfahren in einem Steuersystem (S) ausgeführt wird, und wobei das Verfahren **dadurch gekennzeichnet ist, dass** es Folgendes umfasst:
- Ausführen einer ersten Subskriptionsphase, die Folgendes umfasst:
(i) Zuordnen (201) einer Einheit öffentlicher IP-Adressen, um die Kommunikationssitzung mit dem Dienstsystem herzustellen,
(ii) Empfangen (202), von dem Dienstsystem kommend, einer Einheit von Authentifizierungtoken, um einen Zugang zu dem Dienstsystem zu genehmigen,
- Ausführen einer zweiten Phase zum Herstellen der Kommunikationssitzung, das Folgendes umfasst:
(a) Empfangen (203) einer Anforderung für Zugang zu dem Dienstsystem und zufälliges Auswählen eines Paares, das eine öffentlichen IP-Adresse und ein Authentifizierungstoken aus einer Liste von Paaren, die jeweils eine öffentliche IP-Adresse zuordnen, die aus der Einheit erhaltenen öffentlicher IP-Adressen ausgewählt wird, und ein Authentifizierungstoken, das aus der Einheit erhaltener Authentifizierungstoken ausgewählt wird, zuordnet,
(b) Herstellen (204) der Kommunikationssitzung mit dem Dienstsystem unter Verwendung des ausgewählten Paares.

2. Verfahren nach Anspruch 1, wobei das Verfahren außerdem Folgendes umfasst: Anlegen der Liste von Paaren, bevor die Anforderung um Zugang zu dem Dienstsystem empfangen wird, wobei die Liste von Paaren für mehrere getrennte Kommunikationssitzungen gleich ist.

3. Verfahren nach Anspruch 1, wobei das Verfahren außerdem Folgendes umfasst: Anlegen der Liste von Paaren, nachdem die Anforderung um Zugang zu dem Dienstsystem empfangen wurde, wobei die Liste von Paaren für jede Kommunikationssitzungen neu ist.

4. Verfahren nach einem der Ansprüche 1 bis 3, wobei das Zuordnen einer Einheit öffentlicher IP-Adressen zum Herstellen der Kommunikationssitzung mit dem Dienstsystem Folgendes umfasst:
- Zuordnen einer Einheit öffentlicher IP-Adressen für jeden Dienst, für den die Benutzervorrichtung (100) eine Zugangsgenehmigung aufweist, oder
- Zuordnen einer Einheit öffentlicher IP-Adressen für mehrere Dienste, für die die Benutzervorrichtung (100) eine Zugangsgenehmigung besitzt.

5. Verfahren nach einem der Ansprüche 1 bis 4, wobei das Empfangen, von dem Dienstsystem kommend, der Einheit von Authentifizierungstoken zum Genehmigen eines Zugangs zu dem Dienstsystem Folgendes umfasst:
- Erhalten einer Einheit von Authentifizierungtoken für jeden Dienst, für den die Benutzervorrichtung (100) eine Zugangsgenehmigung besitzt, oder
- Erhalten einer Einheit von Authentifizierungtoken für mehrere Dienste, für die die Benutzervorrichtung (100) eine Zugangsgenehmigung besitzt.

6. Verfahren nach einem der Ansprüche 1 bis 5, wobei jedes Authentifizierungstoken der Einheit von Authentifizierungstoken für mehrere getrennte Kommunikationssitzungen über eine vorbestimmte Gültigkeitsperiode gültig ist.

7. Wartungsverfahren einer Benutzervorrichtung (100), die mit einem lokalen Kommunikationsnetzwerk (LAN) verbunden ist, das ein Netzwerk-Gateway (GW) zum Zugreifen auf ein Weitverkehrsnetzwerk (WAN) umfasst, wobei das Wartungsverfahren dadurch charakterisiert ist, dass es Folgendes umfasst:
- Herstellen einer Kommunikationssitzung zwischen der Benutzervorrichtung (100) und einem Wartungsdienstsystem, das einen Wartungsdienst hostet, zu dem die Benutzervorrichtung (100) Zugang anfordert, durch Ausführen des Verfahrens zum Steuern einer Kommunikationssitzung nach einem der Ansprüche 1 bis 6,
- Durchführen einer Wartungsoperation an der Benutzervorrichtung (100), wenn die Kommunikationssitzung mit dem Wartungsdienstsystem hergestellt ist.

8. System zum Steuern einer Kommunikationssitzung zwischen einer Benutzervorrichtung (100) und einem Dienstsystem, das einen Dienst hostet, auf den die Benutzervorrichtung (100) den Zugang anfordert, wobei die Benutzervorrichtung (100) mit einem lokalen Kommunikationsnetz (LAN) verbunden ist, das ein Netzwerk-Gateway (GW) für den Zugang zu einem Weitverkehrsnetz (WAN) umfasst, wobei das Steuersystem (S) **dadurch gekennzeichnet ist, dass** es elektronische Schaltungsanordnungen umfasst, die konfiguriert sind zum:
- Ausführen einer ersten Subskriptionsphase, die Folgendes umfasst:
(i) Zuordnen (201) einer Einheit öffentlicher IP-Adressen, um die Kommunikationssitzung mit dem Dienstsystem herzustellen,
(ii) Empfangen (202), von dem Dienstsystem kommend, einer Einheit von Authentifizierungtoken, um einen Zugang zu dem Dienstsystem zu genehmigen,
- Ausführen einer zweiten Phase zum Herstellen der Kommunikationssitzung, das Folgendes umfasst:
(a) Empfangen (203) einer Anforderung für Zugang zu dem Dienstsystem und zufälliges Auswählen eines Paares, das eine öffentlichen IP-Adresse und ein Authentifizierungstoken, aus einer Liste von Paaren, die jeweils eine öffentliche IP-Adresse zuordnen, die aus der Einheit erhaltenen öffentlicher IP-Adressen ausgewählt wird, und ein Authentifizierungstoken, das aus der Einheit erhaltener Authentifizierungstoken ausgewählt wird, zuordnet,
(b) Herstellen (204) der Kommunikationssitzung mit dem Dienstsystem unter Verwendung des ausgewählten Paares.

9. Netzwerk-Gate (GW) für Zugang zu einem Weitverkehrsnetzwerk (WAN), das mit einem lokalen Kommunikationsnetzwerk (LAN) verbunden ist, wobei das Netzwerk-Gate (GW) **dadurch gekennzeichnet ist, dass** es ein Steuersystem (S) nach Anspruch 8 umfasst.

10. Computerprogrammprodukt, das Anweisungen umfasst, die das Ausführen durch einen Prozessor des Verfahrens nach einem der Ansprüche 1 bis 6 bewirkt, wenn die Anweisungen von dem Prozessor ausgeführt werden.

11. Speichermedium, das ein Computerprogramm speichert, das Anweisungen umfasst, die die Ausführung durch einen Prozessor des Verfahrens nach einem der Ansprüche 1 bis 6 bewirken, wenn die Anweisungen von dem Prozessor gelesen und ausgeführt werden.

## Claims

1. Method for controlling a communication session between a user device (100) and a service system hosting a service to which said user device (100) requests access, said user device (100) being connected to a local communication network (LAN) comprising a network gateway (GW) for access to a wide area network (WAN), said method being executed in a control system (S), and said method being **characterised in that** it comprises:
- executing a first subscription phase comprising:
(i) allocating (201) a set of public IP addresses to establish said communication session with said service system,
(ii) receiving (202), from said service system, a set of authentication tokens for authorising access to said service system,
- executing a second phase, of establishing said communication session, comprising:
(a) receiving (203) a request for access to said service system, and randomly selecting a pair associating a public IP address and an authentication token from a list of pairs each associating a public IP address selected from the set of public IP addresses obtained and an authentication token selected from the set of authentication tokens obtained,
(b) establishing (204) said communication session with said service system using said selected pair.

2. Method according to claim 1, said method furthermore comprising: creating said list of pairs before said request for access to said service system is received, said list of pairs being the same for several distinct communications sessions.

3. Method according to claim 1, said method furthermore comprising: creating said list of pairs after having received said request for access to said service system, said list of pairs being new at each communication session.

4. Method according to any one of claims 1 to 3, wherein allocating a set of public IP addresses to establish said communication session with said service system comprises:
- allocating a set of public IP addresses for each service which said user device (100) is authorised to access, or
- allocating a set of public IP addresses for several services which said user device (100) is authorised to access.

5. Method according to any one of claims 1 to 4, wherein receiving, from said service system, said set of authentication tokens for authorising access to said service system comprises:
- obtaining a set of authentication tokens for each service which said user device (100) is authorised to access, or
- obtaining a set of authentication tokens for several services which said user device (100) is authorised to access.

6. Method according to any one of claims 1 to 5, wherein each authentication token in said set of authentication tokens is valid for several distinct communication sessions over a predetermined period of validity.

7. Method for maintaining a user device (100) connected to a local communication network (LAN) comprising a network gateway (GW) for access to a wide area network (WAN), said maintenance method being **characterised in that** it comprises:
- establishing a communication session between said user device (100) and a maintenance service system hosting a maintenance service to which said user device (100) requests access, by executing said method for controlling a communication session according to any one of claims 1 to 6,
- performing a maintenance operation on said user device (100), when said communication session is established with said maintenance service system.

8. System for controlling a communication session between a user device (100) and a service system hosting a service to which said user device (100) requests access, said user device (100) being connected to a local communication network (LAN) comprising a network gateway (GW) for access to a wide area network (WAN), said control system (S) being **characterised in that** it comprises electronic circuitry configured to:
- execute a first subscription phase comprising:
(i) allocating (201) a set of public IP addresses to establish said communication session with said service system,
(ii) receiving (202), from said service system, a set of authentication tokens for authorising access to said service system,
- executing a second phase, of establishing said communication session, comprising:
(a) receiving (203) a request for access to said service system, and randomly selecting a pair associating a public IP address and an authentication token from a list of pairs each associating a public IP address selected from the set of public IP addresses obtained and an authentication token selected from the set of authentication tokens obtained,
(b) establishing (204) said communication session with said service system using said selected pair.

9. Network gateway (GW) for access to a wide communication network (WAN) connected to a local communication network (LAN), said network gateway (GW) being **characterised in that** it comprises a control system (S) according to claim 8.

10. Computer program product, comprising instructions causing the execution, by a processor, of the method according to any one of claims 1 to 6, when said instructions are executed by the processor.

11. Storage medium, storing a computer program comprising instructions causing the execution, by a processor, of the method according to any one of claims 1 to 6, when said instructions are read and executed by the processor.
